# EUROPÄISCHE PATENTSCHRIFT

(11) **EP 1 710 100 B1**
(45) Veröffentlichungstag und Bekanntmachung des Hinweises auf die Patenterteilung: **20.05.2009**
(21) Anmeldenummer: 06006786.5
(22) Anmeldetag: 30.03.2006
(51) Int. Cl.: B60D 1/02, B60D 1/14

(54) **Schwerlastkupplung**
Heavy duty coupling
Accouplement pour charges lourdes

(30) Priorität: 06.04.2005 DE 102005015818
(43) Veröffentlichungstag der Anmeldung: 11.10.2006
(73) Patentinhaber: Rockinger Agriculture GmbH, 99869 Günthersleben-Wechmar (DE)
(72) Erfinder: Schack, Jörg, 99869 Hochheim (DE)
(74) Vertreter: Herzog, Markus

(56) Entgegenhaltungen:
- DE-A1- 10 304 978
- FR-A- 2 559 714
- US-A- 2 465 065
- US-A- 4 714 264
- US-A- 5 224 960

## Beschreibung

Die vorliegende Erfindung betrifft eine Kupplungsvorrichtung für ein Fahrzeug zur Ankopplung eines Lastobjekts, insbesondere eines Anhängers.

Kupplungsvorrichtungen dieser Art werden üblicherweise am hinteren Teil des Fahrzeugs montiert und müssen in der Regel derart eingerichtet sein, dass sie die vom Lastobjekt ausgehenden Zugkräfte in die Fahrzeugkarosserie einleiten. Darüber hinaus dienen einige Kupplungsvorrichtungen, beispielsweise Kupplungsvorrichtungen zur Ankopplung von einachsigen Anhängern, auch zur Einleitung von orthogonal zur Fahrebene gerichteten Stützkräften in die Fahrzeugkarosserie.

Aus einer Ausführungsform der DE-A1-103 04 978 ist es bekannt, dass industrielle oder landwirtschaftliche Arbeitsfahrzeuge zur Montage von Kupplungsvorrichtungen einen Anhängebock an der Hinterseite des Fahrzeugs aufweisen, der sich vertikal erstreckt und an seinem oberen Ende am Fahrzeug befestigt ist. In vertikale Längsführungen des Anhängebocks lässt sich dann eine Montageplatte einsetzen und befestigen, an welcher eine Kupplungseinheit angebracht ist. Einer weiteren alternativen Ausführungsform dieser Druckschrift ist ferner zu entnehmen, dass für den flexiblen Einsatz der Fahrzeuge mit verschiedenen Kupplungssystemen die oben erwähnten Typen von Arbeitsfahrzeugen neben dem Anhängebock ferner auch eine Zugpendelanlenkung umfassen können, an welcher ein Zugpendel mit einer weiteren Kupplungseinheit zum Ziehen eines Anhängers angekoppelt werden kann.

Bei den oben beschriebenen herkömmlichen Kupplungsvorrichtungen tritt das Problem auf, dass an dem Anhängebock des Fahrzeugs zwar einerseits eine Vielzahl verschiedener Kupplungstypen flexibel montiert werden können, jedoch andererseits die von dem Anhängebock aufnehmbaren Zugkräfte parallel zur Fahrbahnebene durch die freitragende Befestigung des Anhängebocks deutlich begrenzt sind. Insbesondere kann es bei einem unerwarteten Anstieg der Zugkräfte, beispielsweise beim Blockieren des Anhängers oder bei zu schweren Lastobjekten zu einer Beschädigung oder gar einem Herausreißen des Anhängebocks aus seiner Verankerung an der Fahrzeugkarosserie kommen. Die gleichen Probleme treten auch auf, wenn die Zugkräfte über die Zugpendelanlenkung in das Fahrzeug eingeleitet werden.

Der Vollständigkeit halber sei noch auf die US-A-4,714,264 verwiesen. Die darin offenbarte Kupplungsvorrichtung umfasst zwei an Anlenkstellen am zu ziehenden Anhänger angebrachte Arme, die vermittels einer Kupplungseinheit an ihren distalen Enden mit dem Fahrzeug gekoppelt sind. Durch die spezielle Positionierung der Anlenkstellen am Anhänger, die im Wesentlichen relativ zu einer Querachse des Anhängers zueinander schräg gegenüberliegend angeordnet sind, kann mittels dieser Kupplungsvorrichtung einer Gierbewegung als auch einer Kippbewegung des Anhängers bei der Fahrt entgegengewirkt werden.

Vor diesem Hintergrund ist es Aufgabe der vorliegenden Erfindung, eine Kupplungsvorrichtung der oben genannten Art bereitzustellen, welche einerseits größtmögliche Flexibilität für die Ankopplung verschiedener Lastobjekte bietet und andererseits die sichere Einleitung auch hoher Zugkräfte in das Fahrzeug erlaubt.

Diese Aufgabe wird gemäß der vorliegenden Erfindung gelöst durch eine Kupplungsvorrichtung für ein Fahrzeug zur Ankopplung eines Lastobjekts, insbesondere eines Anhängers, die Kupplungsvorrichtung umfassend eine Montageeinheit, welche an einem Anhängebock des Fahrzeugs anbringbar ist, eine Zugpendeleinheit, welche an einer Zugpendelanlenkung des Fahrzeugs anbringbar ist, und eine Kupplungsanordnung mit einer Kupplungseinheit, an welcher das Lastobjekt ankuppelbar ist, wobei die Kupplungsanordnung in einem an dem Fahrzeug montierten Zustand der Kupplungsvorrichtung sowohl mit der Montageeinheit als auch mit der Zugpendeleinheit in Zugkraftübertragungsverbindung steht.

Erfindungsgemäß ist also die Kupplungsanordnung in einem an dem Fahrzeug montierten Zustand der Kupplungsvorrichtung sowohl mit der an dem Anhängebock des Fahrzeugs angebrachten Montageeinheit als auch mit der an der Zugpendelanlenkung des Fahrzeugs angebrachten Zugpendeleinheit derart verbunden, dass von dem Lastobjekt ausgehende Zugkräfte sowohl über den Anhängebock als auch über die Zugpendelanlenkung in das Fahrzeug eingeleitet werden. Die in das Fahrzeug eingeleitete Gesamtzugkraft wird dadurch auf Anhängebock und Zugpendelanlenkung, welche an verschiedenen Punkten des Fahrzeugs verankert sind, verteilt, sodass mit einer solchen Kupplungsvorrichtung deutlich größere Zugkräfte realisiert werden können. Da die Kupplungsvorrichtung ferner die Kupplungsanordnung mit der Kupplungseinheit zur Ankopplung des Lastobjekts aufweist, besitzt die erfindungsgemäße Kupplungsvorrichtung ferner den Vorteil einer einfachen und flexiblen Handhabung sowie einer Anpassung an verschiedene Gegenkupplungsanordnungen von verschiedenen Lastobjekten.

Grundsätzlich können die Montageeinheit, die Zugpendeleinheit und die Kupplungsanordnung separate Bauteile oder Bauteilgruppen bilden, welche im betriebsbereiten Zustand am Fahrzeug in der oben beschriebenen Weise montiert sind. Alternativ können jedoch auch zwei oder alle drei der Bauteile bzw. Bauteilgruppen, Montageeinheit, Zugpendeleinheit und Kupplungsanordnung, als vormontierte oder auch als einstückig ausgebildete Einheit ausgebildet sein.

Die Zugkraftübertragungsverbindung, in welcher die Montageeinheit, die Zugpendeleinheit und die Kupplungsanordnung in einem an dem Fahrzeug montierten Zustand der Kupplungsvorrichtung miteinander verbunden sind, ist vorzugsweise für eine Zugkraft eingerichtet, die im Wesentlichen in einer parallel zur Fahrebene verlaufende Richtung wirkt. Auf diese Weise können Lastobjekte in Fahrtrichtung des Fahrzeugs geschleppt oder gezogen werden.

Im Hinblick auf eine einfache Montage der Montageeinheit an dem Anhängebock des Fahrzeugs ist es von Vorteil, wenn die Montageeinheit als Montageplatte ausgeführt ist, welche in an dem Anhängebock vorgesehene, vorzugsweise im Wesentlichen vertikal verlaufende Längsführungen einführbar ist. Eine Vielzahl von Fahrzeugtypen, für die der Einsatz der erfindungsgemäßen Kupplungsvorrichtung in Frage kommt, weist einen Anhängebock mit standardisierten vertikalen Führungsschienen auf, zwischen welchen eine solche Montageplatte vertikal eingeschoben werden kann, um ein einfaches Montieren bzw. Demontieren der Kupplungsvorrichtung zu ermöglichen.

In einer bevorzugten Ausführungsform der Kupplungsvorrichtung ist ein von der Zugpendelanlenkung abgewandter Abschnitt der Zugpendeleinheit auf einer am Anhängebock vorgesehenen Zugpendelauflage abstützbar. Eine solche Konstruktion hat den Vorteil, dass in einem am Fahrzeug montierten Zustand der Kupplungsvorrichtung eine auf die Kupplungsanordnung einwirkende Stützkraft, d.h. eine orthogonal zur Fahrebene nach unten wirkende Kraft, über diese Zugpendelauflage in den Anhängebock eingeleitet wird. Wenn insbesondere der Anhängebock im Wesentlichen vertikal verläuft und an seinem oberen Längsende am Fahrzeug befestigt ist, so können solche Stützkräfte durch den Anhängebock sehr zuverlässig und stabil in das Fahrzeug eingeleitet werden.

Liegt die Zugpendeleinheit auf der Zugpendelauflage lediglich auf, ist an dieser ansonsten nicht befestigt und kann sich insbesondere in Längsrichtung der Zugpendeleinheit bezüglich der Zugpendelauflage verschieben, so kann eine definierte Verteilung der Zugkräfteeinleitung zwischen Montageplatte und Zugpendeleinheit erreicht werden.

Wenn die Montageeinheit beim Betrieb des Fahrzeugs am Anhängebock in vertikaler Richtung im Wesentlichen unverschiebbar angeordnet ist, d.h. wenn beispielsweise die in die Führungsschienen des Anhängebocks eingeführte Montageplatte zusätzlich in vertikaler Richtung arretiert ist, so kann ein Teil der auf die Kupplungsanordnung wirkenden Stützkraft zusätzlich auch über die Montageeinheit in den Anhängebock des Fahrzeugs eingeleitet werden.

In einer besonders einfachen Realisierung ist die Kupplungsvorrichtung derart eingerichtet, dass die Kupplungsanordnung an einem von der Zugpendelanlenkung abgewandten Kupplungsende der Zugpendeleinheit angebracht ist, welches über die Zugpendelauflage vorsteht. Ein solches vorstehendes Kupplungsende bietet daher einen Montagebereich für die Kupplungsanordnung, welcher außerhalb des Anhängebocks liegt und somit leicht zugänglich ist.

In einer vorteilhaften Ausführungsform der erfindungsgemäßen Kupplungsvorrichtung ist die Kupplungsanordnung mit der Montageeinheit oder/und der Zugpendeleinheit gelenkig verbunden. Eine solche Gelenkverbindung bietet vor allem drei Vorteile:

Ein erster Vorteil ergibt sich aus einer vereinfachten Montage der Kupplungsvorrichtung, da zumindest zwei Bauteile bzw. Bauteilgruppen aus Montageeinheit, Zugpendeleinheit und Kupplungsanordnung gelenkig miteinander verbunden sind und somit die Kupplungsvorrichtung beim Anbringen am Anhängebock und an der Zugpendelanlenkung weniger sperrig ist. Muss beispielsweise zur Montage der Kupplungsvorrichtung eine Montageplatte vertikal in die Schienen des Anhängebocks eingeführt werden und gleichzeitig die Zugpendeleinheit der Kupplungsvorrichtung horizontal in die Zugpendelanlenkung eingeführt werden, so ist für eine solche Montage die Bereitstellung einer Gelenkverbindung sowohl zwischen Kupplungsanordnung und Montageeinheit als auch zwischen Kupplungsanordnung und Zugpendeleinheit von Vorteil.

Ein zweiter Vorteil einer Gelenkverbindung zwischen Kupplungsanordnung und Montageeinheit oder/und zwischen Kupplungsanordnung und Zugpendeleinheit ergibt sich daraus, dass bei einer Belastung der Kupplungsanordnung durch ein angekoppeltes Lastobjekt kein Kraftmoment auf diese Verbindungsstelle wirkt, welches beispielsweise zu einem Bruch dieser Verbindungsstelle führen könnte.

Ferner bietet die in der oben beschriebenen Ausführungsform vorgesehene Gelenkverbindung den dritten Vorteil, dass Fertigungstoleranzen der Kupplungsvorrichtung bzw. unterschiedliche Abstände zwischen Anhängebock und Zugpendelanlenkung am Fahrzeug einfacher ausgeglichen werden können, da eine gelenkige Kupplungsvorrichtung in gewissem Rahmen an solche Abweichungen angepasst werden kann.

Die oben beschriebene Gelenkverbindung wirkt besonders vorteilhaft auch in der bereits erwähnten Ausführungsform, in der die Zugpendeleinheit auf der Zugpendelauflage lediglich aufliegt. Bei einer Zugkraftbelastung einer solchen Kupplungsvorrichtung im am Fahrzeug montierten Zustand kann dann unabhängig von Unterschieden im elastischen Nachgeben zwischen Montageeinheit und Anhängebock einerseits und Zugpendeleinheit und Zugpendelanlenkung andererseits eine definierte Verteilung auf die beiden verschiedenen Einleitungswege der Zugkraft sichergestellt werden.

Zur Erleichterung der Montage der erfindungsgemäßen Kupplungsvorrichtung sowie zum Ausgleich von Fertigungstoleranzen und schwankenden Abständen zwischen Anhängebock und Zugpendelanlenkung kann alternativ oder zusätzlich ferner die Zugpendeleinheit ein in seiner Länge oder in der Position seines Anlenkpunkts verstellbares, insbesondere teleskopierbares, Zugpendel umfassen.

Die Gelenkverbindung weist vorzugsweise eine Schwenkachse auf, welche in einem am Fahrzeug montierten Zustand der Kupplungsvorrichtung im Wesentlichen parallel zur Fahrebene und orthogonal zur Längsrichtung des Fahrzeugs orientiert ist.

Eine besonders einfache und gleichzeitig flexible Kupplungsvorrichtung kann dadurch erhalten werden, dass die Kupplungsanordnung ein an der Montageeinheit angebrachtes erstes Brückenteil und ein an der Zugpendeleinheit angebrachtes zweites Brückenteil umfasst, und dass die Kupplungseinheit in dem an dem Fahrzeug montierten Zustand der Kupplungsvorrichtung mit beiden Brückenteilen verbunden oder durch die beiden Brückenteile gebildet ist. Derartige Brückenteile übertragen auf einfache und stabile Weise Zugkräfte von der Kupplungseinheit auf die Montageeinheit bzw. die Zugpendeleinheit.

Prinzipiell können die beiden Brückenteile gelenkig miteinander oder an der Kupplungseinheit verbunden oder verbindbar sein, sodass sie Zugkräfte zwischen der Kupplungseinheit und der Montageeinheit bzw. der Zugpendeleinheit übertragen. Es ist jedoch bevorzugt, dass die beiden Brückenteile in dem an dem Fahrzeug montierten Zustand der Kupplungsvorrichtung starr miteinander verbunden sind, vorzugsweise über eine Versteifungsplatte oder Versteifungsstrebe. Auf diese Weise kann die Stabilität der Kupplungsanordnung erhöht werden. Außerdem kann durch eine starre Verbindung zwischen den beiden Brückenteilen gewährleistet werden, dass die Kupplungsvorrichtung im belasteten sowie auch im unbelasteten Zustand eine definierte Form beibehält.

Bei der Verwendung einer Kupplungsanordnung mit zwei Brückenteilen kann insbesondere daran gedacht werden, dass die beiden Brückenteile jeweils eine in einem am Fahrzeug montierten Zustand der Kupplungsvorrichtung im Wesentlichen parallel zur Fahrebene orientierte Kupplungsplatte aufweisen, wobei zwischen den beiden Kupplungsplatten ein Gegenkupplungselement des Lastobjekts aufnehmbar und mit einem zwischen den Kupplungsplatten verlaufenden Sicherungsstift sicherbar ist. Eine solche Kupplungseinheit ist insbesondere für die Ankopplung von Anhängern zweckmäßig, welche mit einer Deichsel angekoppelt werden, die an ihrem Kupplungsende eine Kupplungsöse aufweist.

In einer alternativen Ausführungsform wird vorgeschlagen, dass die Kupplungsanordnung ein zwischen der Montageeinheit und der Zugpendeleinheit verlaufendes Brückenteil umfasst, an welchem die Kupplungseinheit angebracht oder ausgebildet ist. Auf diese Weise kann die Anzahl der Bauteile der Kupplungsvorrichtung reduziert werden.

Die erfindungsgemäße Kupplungsvorrichtung ist besonders flexibel einsetzbar, wenn das Brückenteil eine Anschlussplatte, insbesondere Lochplatte, aufweist, an welcher die Kupplungseinheit, vorzugsweise austauschbar gegen Kupplungseinheiten verschiedener Typen, anschließbar ist. Eine solche Anschlussplatte ist natürlich auch bei einer Kupplungsvorrichtung in der ersten Ausführungsform denkbar, wobei sie dann mit den beiden Brückenteilen verbunden ist oder die beiden Brückenteile starr miteinander verbindet. An einer Anschlussplatte lassen sich verschiedene Typen von an sich bekannten Kupplungseinheiten anschließen, etwa Maulkupplungen, Bolzenkupplungen oder Kugelkupplungen etc..

Allgemein kann daran gedacht werden, dass eine in einer oben beschriebenen Kupplungsvorrichtung gemäß der Erfindung verwendete Kupplungseinheit ein für den Eingriff mit einem Gegenkupplungselement des Lastobjekts bestimmtes Kupplungselement aufweist. Je nach verwendetem Kupplungstyp lässt sich somit eine Ankopplung zwischen Fahrzeug und Lastobjekt sicher herstellen.

Wenn im Zusammenhang mit der vorliegenden Erfindung hauptsächlich von der Aufnahme von Zugkräften die Rede ist, so soll hierdurch die Aufnahme von Schubkräften, wie sie beispielsweise beim Rückwärtsfahren des Fahrzeugs zwischen Fahrzeug und Lastobjekt auftreten, d.h. ebenfalls im Wesentlichen in der Fahrebene und in der dann gegebenen Fahrrichtung verlaufenden Kräften, nicht ausgeschlossen werden. Die häufigere Bezugnahme auf Zugkräfte ist darin begründet, dass die Kupplungsvorrichtung im Betrieb des Fahrzeugs üblicherweise mehr auf Zug als auf Schub belastet wird.

Die vorliegende Erfindung wird nachfolgend anhand bevorzugter Ausführungsbeispiele unter Bezugnahme auf die beigefügten Zeichnungen näher erläutert.
- Fig. 1: zeigt eine perspektivische Ansicht eines ersten Ausführungsbeispiels einer erfindungsgemäßen Kupplungsvorrichtung.
- Fig. 2: zeigt eine Seitenansicht der in Fig. 1 gezeigten Kupplungsvorrichtung.
- Fig. 3: illustriert die Montage der in Fig. 1 gezeigten Kupplungsvorrichtung an einem Anhängebock und an einer Zugpendelanlenkung eines Fahrzeugs.
- Fig. 4: zeigt Aufbau und Montage eines zweiten Ausführungsbeispiels der erfindungsgemäßen Kupplungsvorrichtung in perspektivischer Ansicht.

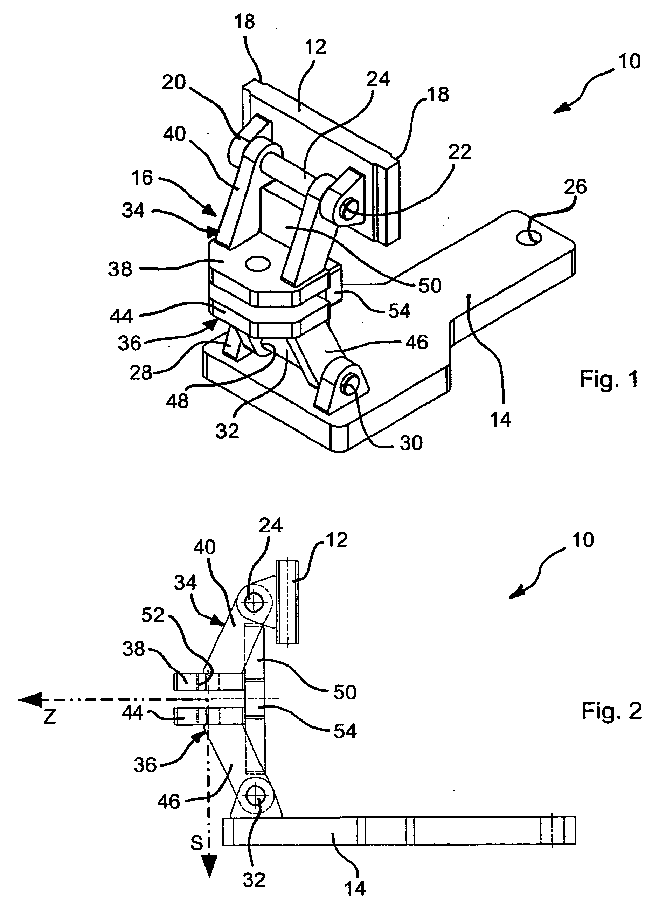

In Fig. 1 ist ein erstes Ausführungsbeispiel der erfindungsgemäßen Kupplungsvorrichtung allgemein mit 10 bezeichnet. Die Kupplungsvorrichtung 10 umfasst eine Montageplatte 12, ein Zugpendel 14 sowie eine Kupplungsanordnung 16, welche einerseits an der Montageplatte 12 und andererseits an dem Zugpendel 14 angebracht ist.

Die Montageplatte 12 weist an gegenüberliegenden Randabschnitten beidseitig der Platte 12 Abstufungen 18 auf. Die Breite der Platte 12 zwischen den die Abstufungen 18 aufweisenden Stirnseiten der Platte 12 sowie die Abmessungen der Abstufungen 18 selbst sind so bemessen, dass sie in vertikale Längsführungen eines Anhängebocks eines Fahrzeugs einschiebbar sind, wie später noch näher erläutert wird.

Auf einer Flächenseite der Montageplatte 12 sind zwei Vorsprünge 20 ausgebildet oder befestigt, welche jeweils eine Aufnahmeöffnung 22 zur Aufnahme eines zwischen den Vorsprüngen 20 verlaufenden Gelenkbolzens 24 aufweisen. Über diesen Gelenkbolzen 24 ist die Kupplungsanordnung 16 schwenkbar an der Montageplatte 12 angebracht.

Das Zugpendel 14 weist eine längliche, plattenförmige Gestalt auf. An einem fahrzeugseitigen Ende ist ein Anlenkbereich 26 ausgebildet, welcher in Fig. 1 durch ein Durchgangsloch repräsentiert ist und an welchem das Zugpendel 14 an einer Zugpendelanlenkung des Fahrzeugs montierbar ist, wie später noch eingehender erläutert wird.

An einem dem Fahrzeug abgewandten Ende des Zugpendels 14 sind ähnlich den Vorsprüngen 20 der Montageplatte 12 zwei Vorsprünge 28 ausgebildet oder befestigt, welche wiederum jeweils eine Aufnahmeöffnung 30 zur Aufnahme eines zwischen den Vorsprüngen 29 verlaufenden Gelenkbolzens 32 aufweisen. Über den Gelenkbolzen 32 ist die Kupplungsanordnung 16 schwenkbar an dem Zugpendel 14 angebracht.

Die funktionsmäßig zwischen Montageplatte 12 und Zugpendeleinheit 14 angeordnete Kupplungsanordnung 16 ist grundsätzlich aus einem ersten Brückenteil 34 und einem zweiten Brückenteil 36 aufgebaut.. Das erste Brückenteil 34 umfasst eine Kupplungsplatte 38, von welcher aus sich zwei Arme 40 erstrecken. An den der Kupplungsplatte 38 abgewandten Enden weisen diese Arme 40 jeweils Lageröffnungen 42 auf, durch welche der zwischen den Vorsprüngen 20 der Montageplatte 12 verlaufende Gelenkbolzen 24 drehbar geführt ist, sodass das erste Brückenteil 34 an dem Gelenkbolzen 24 schwenkbar getragen ist.

Auf analoge Weise ist das zweite Brückenteil 36 aus einer Kupplungsplatte 44 und sich schräg von der Kupplungsplatte 44 aus erstreckenden Armen 46 gebildet, wobei die Arme 46 wiederum an ihren distalen Enden über Lageröffnungen 48 verfügen, durch welche der Gelenkbolzen 32 des Zugpendels 14 verläuft. Auf diese Weise ist das zweite Brückenteil 36 über die Arme 46 gelenkig an dem Zugpendel 14 angebracht.

Wie besonders deutlich in Fig. 2 zu erkennen ist, sind das erste Brückenteil 34 und das zweite Brückenteil 36 miteinander über eine Verbindungsplatte 50 verbunden. Die Verbindungsplatte 50 kann auf verschiedene Weisen lösbar oder unlösbar an den Brückenteilen 34, 36 befestigt werden. Bevorzugt wird sie an verschiedenen Punkten mit den Brückenteilen verschweißt. Auf diese Weise sind das erste Brückenteil 34 und das zweite Brückenteil 36 in einer bestimmten Relativlage zueinander starr miteinander verbunden. In dieser Relativlage sind die beiden Brückenteile 34, 36 derart angeordnet, dass ihre beiden Kupplungsplatten 38, 44 mit einem bestimmten

Zwischenabstand einander parallel gegenüber liegen, sodass ihre Stirnseiten sowie ein in jeder Kupplungsplatte 38, 44 vorgesehenes Kupplungsloch 52 miteinander fluchten. Durch eine solche starre Relativlage bilden die beiden Brückenteile 34, 36, genauer die beiden Kupplungsplatten 38, 44 eine Kupplungseinheit zur Ankopplung einer Gegenkupplungseinheit eines Lastobjekts.

Neben der Funktion, die beiden Brückenteile 34, 36 in einer bestimmten Relativlage starr miteinander zu verbinden, kommt der Versteifungsplatte 50 ferner die Funktion zu, die gesamte Kupplungsanordnung zu versteifen und für die Aufnahme auch großer Zugkräfte zu stabilisieren. Für die Versteifungsplatte wird daher vorzugsweise eine ausreichend feste und dicke Metallplatte verwendet. Zusätzlich weist die Versteifungsplatte 50 im Bereich ihres Kontakts mit den Kupplungsplatten 38, 44 Verbreiterungen 54 auf, sodass sich für die Versteifungsplatte 50 insgesamt in etwa die Form eines Kreuzes ergibt. In den Bereichen der Verbreiterungen 54 ist dann eine zusätzliche Erhöhung der Biegesteifigkeit der Versteifungsplatte 50 gegen eine in Richtung eines Pfeils Z in Fig. 2 wirkende Zugbelastung der Kupplungsvorrichtung 10 gegeben.

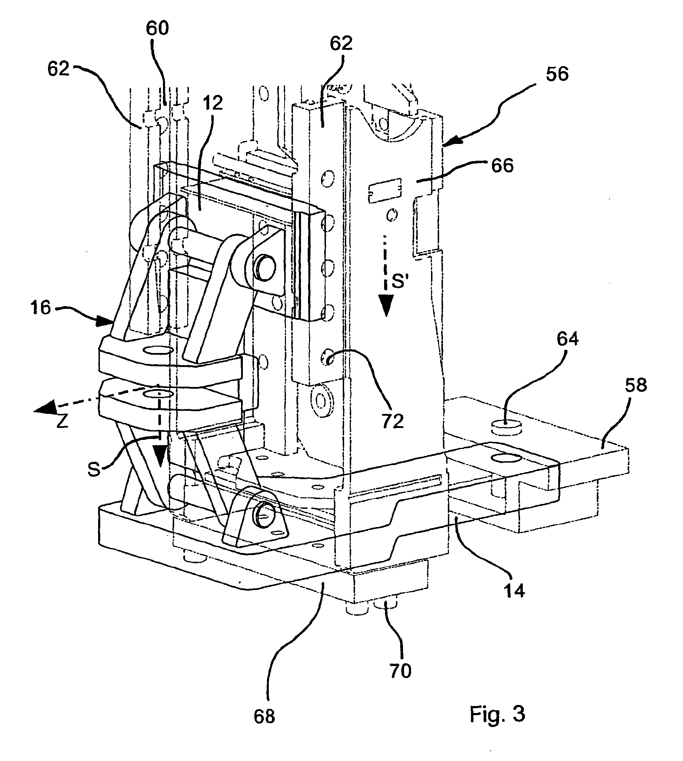

Zur Illustration der Montage der erfindungsgemäßen Kupplungsvorrichtung 10 an einem Fahrzeug sind in Fig. 3 ein Anhängebock 56 sowie eine Zugpendelanlenkung 58 des Fahrzeugs angedeutet. In Fig. 3 befindet sich die Kupplungsvorrichtung 10 in einem an dem Fahrzeug montierten Zustand. Die Montageplatte 12 ist dazu in Längsführungen 60 eingeführt, die in zwei parallel zueinander am Anhängebock 56 befestigten Schienen 62 gebildet sind. Um ein Einführen der Montageplatte 12 in die Längsführungen 60 zu erleichtern bzw. überhaupt zu ermöglichen, können Montageplatte 12, Kupplungsanordnung 16 und Zugpendel 14 gegeneinander um die Gelenkbolzen 24 bzw. 32 geeignet verschwenkt werden.

Außerdem ist das fahrzeugseitige Ende des Zugpendels 14 in Fahrzeuglängsrichtung in die Zugpendelanlenkung 58 eingeführt und dort mit einem Sicherungsbolzen 64 gesichert. Auch für dieses Einführen des Zugpendels 14 in die Zugpendelanlenkung 58 ist die gelenkige Verbindung zwischen Montageplatte 12, Kupplungsanordnung 16 und Zugpendel 14 sehr hilfreich.

Außerdem können durch die Gelenkverbindungen Abweichungen in der Relativlage zwischen Anhängebock 56 und Zugpendelanlenkung 58 bei verschiedenen Fahrzeugen im gewissen Umfang ohne Weiteres ausgeglichen werden.

Der in Fig. 3 gezeigte Anhängebock 56 eines typischen Fahrzeugs, für welches die Kupplungsvorrichtung 10 gemäß der Erfindung ausgelegt ist, umfasst in an sich bekannter Weise zwei parallel zueinander und orthogonal zur Fahrebene ausgerichtete Längsbauteile 66, welche an ihren oberen, in Fig. 3 nicht gezeigten Enden stabil am Fahrzeug, etwa an der Fahrzeugkarosserie, befestigt sind. An ihren unteren Enden sind sie über eine in etwa parallel zur Fahrebene verlaufende Zugpendelauflage 68 fest miteinander verbunden oder zum Zwecke der Montage der erfindungsgemäßen Kupplungsvorrichtung 10 mit einer solchen Zugpendelauflage 68 verbindbar. Dazu können etwa Schraubverbindungen 70 eingesetzt werden. Im montierten Zustand ist das Zugpendel 14 dann zwischen den Längsbauteilen 66 hindurch geführt und liegt von oben auf der Zugpendelauflage 68 auf. Abgesehen von diesem Auflageeingriff und gegebenenfalls einer seitlichen Anlage des Zugpendels an Innenseiten der Längsbauteile 66 ist das Zugpendel 14 nicht am Anhängebock befestigt.

Es wird nun ein Betriebszustand der erfindungsgemäßen Kupplungsvorrichtung beschrieben, in welchem die Kupplungsvorrichtung 10 wie in Fig. 3 gezeigt, am Fahrzeug montiert ist und eine zwischen die Kupplungsplatten 38, 44 eingeführte ösenförmige Gegenkupplungseinheit (nicht gezeigt) eines Lastobjekts durch einen durch die Kupplungslöcher 52 und die ösenförmige Gegenkupplungseinheit geführten Sicherungsstift (ebenfalls nicht gezeigt) an der Kupplunganordnung 16 angekoppelt ist und eine Zugkraft in Richtung des Pfeils Z, d.h. entgegengesetzt der Fahrtrichtung, auf die Kupplungsvorrichtung 10 ausübt. In diesem Zustand ist das Zugpendel 14 im Wesentlichen parallel zur Fahrebene ausgerichtet, die Montageplatte 12 steht im Wesentlichen orthogonal zur Fahrtrichtung, die Kupplungsplatten 34, 36 liegen im Wesentlichen parallel zur Fahrebene und die Arme 40, 40 bzw. 46, 46 verlaufen schräg nach vorn in im Wesentlichen vertikalen in Fahrtrichtung ausgerichteten Ebenen. In Seitenansicht des Fahrzeugs (siehe auch Fig. 2) weist die Kupplungsvorrichtung 10 im montierten Zustand eine grob bogenförmige Gestalt auf, wobei dieser Bogen seine Wölbung in Richtung der Zugkraft (d.h. entgegengesetzt zur Fahrtrichtung) hat und die Zugkraft im Wesentlichen in einem Scheitelpunkt des Bogens in die Kupplungsvorrichtung eingeleitet wird.

Die an der Kupplungsvorrichtung 10 angreifende Zugkraft Z wird nun durch die oben beschriebene Konstruktion zum einen Teil über die Kupplungsplatte 38 des ersten Brückenteils 34, die Arme 40, den Gelenkbolzen 24, die Vorsprünge 20, die Montageplatte 12 und die Schienen 62 in den Anhängebock 56 eingeleitet und zum anderen Teil über die Kupplungsplatte 44 des zweiten Brückenteils 36, die Arme 46, den Gelenkbolzen 32, die Vorsprünge 28 und das Zugpendel 14 in die Zugpendelanlenkung 56 des Fahrzeugs eingeleitet. Auf diese Weise kann die zur Aufnahme der Zugkraft Z erforderliche Gegenkraft einerseits durch den Anhängebock 56 und andererseits durch die Zugpendelanlenkung 58 aufgebracht werden, sodass mit dieser Kupplungsvorrichtung nunmehr auch größere Zuglasten Z bzw. größere Zuglastschwankungen bewältigt werden können. Die Stabilität der Kupplungsvorrichtung wird ferner durch die Versteifungsplatte 50 und die grob bogenförmige Gestalt der Kupplungsvorrichtung 10 verbessert.

Die Kupplungsvorrichtung 10 gemäß des ersten Ausführungsbeispiels ist ferner für die Aufnahme von Stützkräften eingerichtet, welche in Richtung eines Pfeils S vertikal nach unten auf die Kupplungsanordnung wirken. Diese Stützkräfte werden in erster Linie über das zweite Brückenteil 36 in das Zugpendel 14 eingeleitet, welches auf der Zugpendelauflage 68 des Anhängebocks 56 aufliegt und die Stützkraft S somit über diese Zugpendelauflage in den Anhängebock 56 einleitet. Wie in Fig. 3 zu sehen ist, wirkt die Stützkraft S somit als Zugkraft S' auf den Anhängebock 56 in dessen Längsrichtung, sodass die Stützkraft S effektiv durch den Anhängebock 56 aufgenommen werden kann.

Zusätzlich kann es vorteilhaft sein, Teile der Stützkraft S auch über das erste Brückenteil 34, die Montageplatte 12 und die Schienen 62 in den Anhängebock 56 einzuleiten. Zu diesem Zweck kann eine zusätzliche Vertikalarretierung der Montageplatte 12 in den Schienen 62 vorgesehen sein, beispielsweise über nicht gezeigte Einsteckbolzen, welche in Verriegelungslöcher 72 der Schienen 62 unterhalb der Montageplatte 12 einführbar sind. Alternativ kommen andere Mechanismen zur Befestigung der Montageplatte 12 in den Schienen 62 in Frage, beispielsweise ein Verkeilen oder Verschrauben der Montageplatte 12.

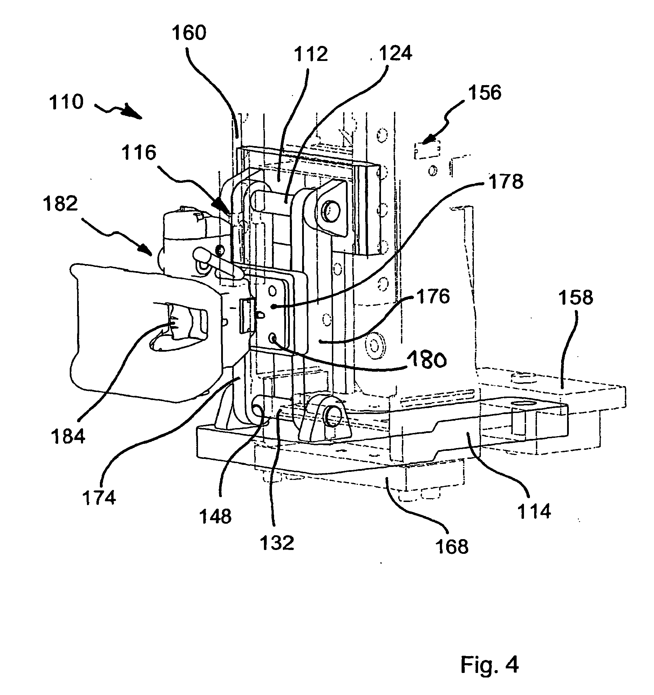

In Fig. 4 ist ein zweites Ausführungsbeispiel einer erfindungsgemäßen Kupplungsvorrichtung allgemein mit 110 bezeichnet. Bauteile der Kupplungsvorrichtung 110 bzw. des Fahrzeugs, welche denen des ersten Ausführungsbeispiels entsprechen, sind mit um 110 erhöhten Bezugszeichen bezeichnet und werden nicht erneut beschrieben.

In der Kupplungsvorrichtung 110 sind eine Montageplatte 112 und ein Zugpendel 114 miteinander über ein Brückenteil 116 verbunden. Das Brückenteil 116 umfasst zwei Streben 174, 176, welche jeweils an ihrem einen Ende Lageröffnungen 124 zur Anlenkung an einen Gelenkbolzen 124 der Montageplatte 112 und an ihrem anderen Ende Lageröffnungen 148 zur Anlenkung an einem Gelenkbolzen 132 des Zugpendels 114 aufweisen. Vereinfacht kann also davon gesprochen werden, dass die über die Versteifungsplatte 50 starr miteinander verbundenen Brückenteile 34, 36 gemäß dem in Fig. 1 bis 3 gezeigten Ausführungsbeispiel in der Kupplungsvorrichtung 110 des zweiten Ausführungsbeispiels durch das eine Brückenteil 116 ersetzt wurde.

In einem mittleren Bereich der Streben 174, 176 ist eine Anschlussplatte 178 befestigt, etwa durch Verschweißen oder Verschrauben. Die Anschlussplatte 178 weist eine Mehrzahl von Anschlusslöchern 180 in solcher Anordnung auf, dass die Anschlussplatte 178 auf diese Weise für den flexiblen Anschluss verschiedener Typen von Kupplungseinheiten ausgelegt ist. Beispielhaft ist in Fig. 4 eine an sich bekannte Maulkupplungseinheit 182 an die Anschlussplatte 178 angebracht. An der an der Rückseite des Fahrzeugs auf diese Weise einfach zugänglichen Anschlussplatte 178 sind wahlweise verschiedene anderen Kupplungseinheiten montierbar, beispielsweise Kugelkupplungen oder Bolzenkupplungen. Die Kupplungseinheit 182 ist dann eine nicht gezeigte Gegenkupplungseinheit des Lastobjekts über einen Eingriff zwischen einem Kupplungselement 184 der Kupplungseinheit 182 mit einem nicht gezeigten Gegenkupplungselement der Gegenkupplungseinheit des Lastobjekts ankoppelbar.

Montage und Wirkungsweise des zweiten Ausführungsbeispiels ergeben sich in analoger Weise aus der oben gegebenen Beschreibung für das erste Ausführungsbeispiel.

Die vorliegende Erfindung ist selbstverständlich nicht auf die gezeigten Ausführungsbeispiele beschränkt, sondern umfasst Abwandlungen, die sich für den Fachmann in nahe liegender Weise ergeben. Insbesondere gehören Kombinationen von Merkmalen der gezeigten Ausführungsbeispiele zum Gegenstand der Erfindung, sodass z.B. daran gedacht wird, auch die Kupplungsplatten 38, 44 des ersten Ausführungsbeispiels derart einzurichten, dass sie für den flexiblen Anschluss verschiedener Typen von Kupplungseinheiten ausgelegt sind, beispielsweise durch Bereitstellung einer Anschlussplatte analog der Anschlussplatte 178 gemäß des zweiten Ausführungsbeispiels.

## Patentansprüche

1. Kupplungsvorrichtung (10; 110) für ein Fahrzeug zur Ankopplung eines Lastobjekts, insbesondere eines Anhängers, die Kupplungsvorrichtung (10; 110) umfassend:
- eine Montageeinheit (12; 112), welche an einem Anhängebock (56; 156) des Fahrzeugs anbringbar ist, **gekennzeichnet durch**
- eine Zugpendeleinheit (14; 114), welche an einer Zugpendelanlenkung (58; 158) des Fahrzeugs anbringbar ist, und
- eine Kupplungsanordnung (16; 116) mit einer Kupplungseinheit (34, 36; 182), an welcher das Lastobjekt ankuppelbar ist,
wobei die Kupplungsanordnung (16; 116) in einem an dem Fahrzeug montierten Zustand der Kupplungsvorrichtung (10; 110) sowohl mit der Montageeinheit (12; 112) als auch mit der Zugpendeleinheit (14; 114) in Zugkraftübertragungsverbindung steht.

2. Kupplungsvorrichtung (10; 110) nach Anspruch 1, **dadurch gekennzeichnet, dass** die Zugkraftübertragungsverbindung für eine Zugkraft (F) eingerichtet ist, die im Wesentlichen in einer parallel zur Fahrebene verlaufenden Richtung wirkt.

3. Kupplungsvorrichtung (10; 110) nach einem der Ansprüche 1 oder 2, **dadurch gekennzeichnet, dass** die Montageeinheit (12; 112) als Montageplatte (12; 112) ausgeführt ist, welche in an dem Anhängebock (56; 156) vorgesehene, vorzugsweise im Wesentlichen vertikal verlaufende Längsführungen (60; 160) einführbar ist.

4. Kupplungsvorrichtung (10; 110) nach einem der vorhergehenden Ansprüche, **dadurch gekennzeichnet, dass** ein von der Zugpendelanlenkung 58; 158) abgewandter Abschnitt der Zugpendeleinheit (14; 114) auf einer am Anhängebock (56; 156) vorgesehenen Zugpendelauflage (68; 168) abstützbar ist.

5. Kupplungsvorrichtung (10; 110) nach Anspruch 4, **dadurch gekennzeichnet, dass** die Kupplungsanordnung (16; 116) an einem von der Zugpendelanlenkung (58; 158) abgewandten Kupplungsende der Zugpendeleinheit (14; 114) angebracht ist, welches über die Zugpendelauflage (68; 168) vorsteht.

6. Kupplungsvorrichtung (10; 110) nach einem der vorhergehenden Ansprüche, **dadurch gekennzeichnet, dass** die Kupplungsanordnung (16; 116) mit der Montageeinheit (12; 112) oder/und der Zugpendeleinheit (14; 114) gelenkig verbunden ist.

7. Kupplungsvorrichtung (10; 110) nach Anspruch 6, **dadurch gekennzeichnet, dass** die Gelenkverbindung eine Schwenkachse (24, 32; 124, 132) aufweist, welche in einem am Fahrzeug montierten Zustand der Kupplungsvorrichtung (10; 110) im Wesentlichen parallel zur Fahrebene und orthogonal zur Längsrichtung des Fahrzeugs orientiert ist.

8. Kupplungsvorrichtung (10) nach einem der vorhergehenden Ansprüche, **dadurch gekennzeichnet, dass** die Kupplungsanordnung (16) ein an der Montageeinheit (12) angebrachtes erstes Brückenteil (34) und ein an der Zugpendeleinheit (14) angebrachtes zweites Brückenteil (36) umfasst, und dass die Kupplungseinheit (16) in dem an dem Fahrzeug montierten Zustand der Kupplungsvorrichtung (10) mit beiden Brückenteilen (34, 36) verbunden oder durch die beiden Brückenteile (34, 36) gebildet ist.

9. Kupplungsvorrichtung (10) nach Anspruch 8, **dadurch gekennzeichnet, dass** die beiden Brückenteile (34, 36) in dem an dem Fahrzeug montierten Zustand der Kupplungsvorrichtung (10) starr miteinander verbunden sind, vorzugsweise über eine Versteifungsplatte (50) oder Versteifungsstrebe.

10. Kupplungsvorrichtung (10) nach Anspruch 8 oder Anspruch 9, **dadurch gekennzeichnet, dass** die beiden Brückenteile (34, 36) jeweils eine in einem am Fahrzeug montierten Zustand der Kupplungsvorrichtung (10) im Wesentlichen parallel zur Fahrebene orientierte Kupplungsplatte (38, 44) aufweisen, wobei zwischen den beiden Kupplungsplatten (38, 44) ein Gegenkupplungselement des Lastobjekts aufnehmbar und mit einem zwischen den Kupplungsplatten (38, 44) verlaufenden Sicherungsstift sicherbar ist.

11. Kupplungsvorrichtung (110) nach einem der vorhergehenden Ansprüche, **dadurch gekennzeichnet, dass** die Kupplungsanordnung (116) ein zwischen der Montageeinheit (112) und der Zugpendeleinheit (114) verlaufendes Brückenteil (116) umfasst, an welchem die Kupplungseinheit (182) angebracht oder ausgebildet ist.

12. Kupplungsvorrichtung (110) nach Anspruch 11, **dadurch gekennzeichnet, dass** das Brückenteil (116) eine Anschlussplatte (178), insbesondere Lochplatte (178), aufweist, an welcher die Kupplungseinheit (182), vorzugsweise austauschbar gegen Kupplungseinheiten verschiedener Typen, anschließbar ist.

13. Kupplungsvorrichtung (10; 110) nach einem der vorhergehenden Ansprüche, **dadurch gekennzeichnet, dass** die Kupplungseinheit (182) ein für den Eingriff mit einem Gegenkupplungselement des Lastobjekts bestimmtes Kupplungselement (184) aufweist.

## Claims

1. A coupling device (10;110) for a vehicle for the coupling of a load, in particular a trailer, the coupling device (10;110) comprising:
- a mounting unit (12;112) which can be attached to a trailer bracket (56;156) of the vehicle, **characterised by**
- a towing swing unit (14;114) which can be attached to towing swing articulation (58;158) of the vehicle, and
- a coupling assembly (16;116) with a coupling unit (34,36; 182), to which the load can be coupled,
wherein, in a condition in which the coupling device (10;110) is mounted on the vehicle, the coupling assembly (16;116) is in towing-force transmitting connection with the mounting unit (12;112) and with the towing swing unit (14;114).

2. A coupling device (10;110) according to Claim 1, **characterised in that** the towing-force transmitting connection is adjusted for a towing force (F) which acts substantially in a direction extending parallel to the travel plane.

3. A coupling device (10;110) according to either Claim 1 Claim 2, **characterised in that** the mounting unit (12;112) is in the form of an mounting plate (12;112) which can be inserted into longitudinal guides (60;160) which are provided on the trailer bracket (56;156) and which preferably extend vertically.

4. A coupling device (10;110) according to any one of the preceding Claims, **characterised in that** a portion of the towing swing unit (14;114) remote from the towing swing articulation (58;158) can be supported on a towing swing support (68;168) provided on the trailer bracket (56;156).

5. A coupling device (10;110) according to Claim 4, **characterised in that** the coupling assembly (16;116) is attached to a coupling end of the towing swing unit (14;114), which is remote from the towing swing articulation (58;158) and which protrudes beyond the towing swing support (68;168).

6. A coupling device (10;110) according to any one of the preceding Claims, **characterised in that** the coupling assembly (16;116) is connected in an articulated manner to the mounting unit (12;112) and/or to the towing swing unit (14;114).

7. A coupling device (10;110) according to Claim 6, **characterised in that** the articulation has a pivot axis (24,32;124,132) which, in a condition in which the coupling device (10;110) is mounted on the vehicle, is directed substantially parallel to the travel plane and orthogonal to the longitudinal direction of the vehicle.

8. A coupling device (10) according to any one of the preceding Claims, **characterised in that** the coupling assembly (16;116) comprises a first bridge part (34) mounted on the mounting assembly (12;112) and a second bridge part (36) mounted on the towing swing unit (14), and **in that**, in the condition in which the coupling device (10) is mounted on the vehicle, the coupling unit (16) is connected to both bridge parts (34,36) or is formed by both bridge parts (34,36).

9. A coupling device (10) according to Claim 8, **characterised in that**, in the condition in which the coupling device (10) is mounted on the vehicle, both bridge parts (34,36) are rigidly connected to one another, preferably via a reinforcing plate (50) or reinforcing strut.

10. A coupling device (10) according to Claim 8 or Claim 9, **characterised in that**, in the condition in which the coupling device (10) is mounted on the vehicle, both bridge parts (34,36) each have a coupling plate (38,44) directed substantially parallel to the travel plane, wherein a counterpart coupling element of the load can be accommodated between the two coupling plates (38,44) and can be secured by a securing pin extending between the coupling plates (38,44).

11. A coupling device (110) according to any one of the preceding Claims, **characterised in that** the coupling assembly (116) comprises a bridge part (116) which extends between the mounting unit (112) and the towing swing unit (114) and on which the coupling unit (182) is mounted or formed.

12. A coupling device (110) according to Claim 11, **characterised in that** the bridge part (116) has a connecting plate (178), in particular a perforated plate (178), to which the coupling unit (182) can be connected, preferably interchangeably with other coupling units of different type.

13. A coupling device (10;110) according to any one of the preceding Claims, **characterised in that** the coupling unit (182) has a coupling element (184) intended for engagement with a counterpart coupling element of the load.

## Revendications

1. Dispositif d'attelage (10 ; 110) pour un véhicule, pour l'attelage d'un objet porte-charge, en particulier une remorque, ledit dispositif d'attelage (10 ; 110) comportant :
- une unité de montage (12 ; 112) qui peut être attachée à un support d'attelage (56 ; 156) du véhicule,
**caractérisé par**
- une unité de traction oscillante (14 ; 114) qui peut être attachée à un organe d'articulation (58 ; 158) du véhicule, et
- une structure d'attelage (16 ; 116) avec une unité d'attelage (34, 36 ; 182), à laquelle l'objet porte-charge peut être couplé,
la structure d'attelage (16 ; 116), lorsque le dispositif d'attelage (10 ; 110) est dans une position montée sur le véhicule, pouvant être reliée avec transmission de force de traction tant à l'unité de montage (12 ; 112) qu'à l'unité de traction oscillante (14 ; 114).

2. Dispositif d'attelage (10 ; 110) selon la revendication 1, **caractérisé en ce que** la liaison avec transmission de force de traction est conçue pour une force de traction (F) qui agit sensiblement dans une direction parallèle au plan de déplacement du véhicule.

3. Dispositif d'attelage (10 ; 110) selon la revendication 1 ou 2, **caractérisé en ce que** l'unité de montage (12 ; 112) est réalisée sous la forme d'une plaque de montage (12 ; 112), qui peut être introduite dans des guidages longitudinaux (60 ; 160), prévus au niveau du support d'attelage (56 ; 156) et orientés, de préférence, sensiblement verticalement.

4. Dispositif d'attelage (10; 110) selon l'une quelconque des revendications précédentes, **caractérisé en ce qu'**une partie de l'unité de traction oscillante (14 ; 114), détournée de l'organe d'articulation (58, 158), peut prendre appui sur un élément d'appui (68 ; 168) prévu au niveau du support d'attelage (56 ; 156).

5. Dispositif d'attelage (10 ; 110) selon la revendication 4, **caractérisé en ce que** la structure d'attelage (16 ; 116) est attachée à l'unité de traction oscillante (14 ; 114), plus précisément à son extrémité de couplage, détournée de l'organe d'articulation (58 ; 158) et s'avançant en saillie au-delà de l'élément d'appui (68 ; 168).

6. Dispositif d'attelage (10 ; 110) selon l'une quelconque des revendications précédentes, **caractérisé en ce que** la structure d'attelage (16 ; 116) est reliée de manière articulée à l'unité de montage (12 ; 112) et/ou à l'unité de traction oscillante (14 ; 114).

7. Dispositif d'attelage (10 ; 110) selon la revendication 6, **caractérisé en ce que** la liaison articulée comporte un axe de pivotement (24, 32 ; 124, 132) qui, lorsque le dispositif d'attelage (10 ; 110) est en position montée sur le véhicule, est orienté sensiblement parallèlement au plan de déplacement du véhicule et orthogonalement à la direction longitudinale du véhicule.

8. Dispositif d'attelage (10) selon l'une quelconque des revendications précédentes, **caractérisé en ce que** la structure d'attelage (16) comporte un premier élément en pont (34), attaché à l'unité de montage (12), et un deuxième élément en pont (36), attaché à l'unité de traction oscillante (14), et **en ce que** l'unité d'attelage (16) est reliée, lorsque le dispositif d'attelage (10) est en position montée sur le véhicule, au deux éléments en pont (34, 36) ou est formée par les deux éléments en pont (34, 36).

9. Dispositif d'attelage (10) selon la revendication 8, **caractérisé en ce que**, lorsque le dispositif d'attelage (10) est en position montée sur le véhicule, les deux éléments en pont (34, 36) sont reliés de manière rigide l'un à l'autre, de préférence par l'intermédiaire d'une plaque de raidissement (50) ou une entretoise de raidissement.

10. Dispositif d'attelage (10) selon la revendication 8 ou la revendication 9, **caractérisé en ce que** les deux éléments en pont (34, 36) comportent respectivement une plaque de couplage (38, 44) qui, lorsque le dispositif d'attelage (10) est en position montée sur le véhicule, est orientée sensiblement parallèlement au plan de déplacement du véhicule, un élément de couplage complémentaire de l'objet porte-charge pouvant être reçu entre les deux plaques de couplage (38, 44) et pouvant être immobilisé par un tenon de sécurité disposé entre les plaques de couplage (38, 44).

11. Dispositif d'attelage (110) selon l'une quelconque des revendications précédentes, **caractérisé en ce que** la structure d'attelage (116) comporte un élément en pont (116), qui est disposé entre l'unité de montage (112) et l'unité de traction oscillante (114) et sur lequel l'unité de couplage (182) est montée ou réalisée.

12. Dispositif d'attelage (110) selon la revendication 11, **caractérisé en ce que** l'élément en pont (116) comporte une plaque d'assemblage (178), en particulier une plaque perforée (178), à laquelle peut être assemblée l'unité de couplage (182), de préférence de manière remplaçable par des unités de couplage de différents types.

13. Dispositif d'attelage (10 ; 110) selon l'une quelconque des revendications précédentes, **caractérisé en ce que** l'unité de couplage (182) comporte un élément de couplage (184) destiné à entrer en prise avec un élément de couplage complémentaire de l'objet porte-charge.
